# EUROPÄISCHE PATENTANMELDUNG

(11) **EP 3 130 898 A1**
(43) Veröffentlichungstag der Anmeldung: **15.02.2017**
(21) Anmeldenummer: 15180668.4
(22) Anmeldetag: 12.08.2015
(51) Int. Cl.: G01J 5/00, G01J 5/02, G01J 5/04, G01J 5/08, G02B 7/182

(54) **PYROMETERSONDE MIT UMLENKSPIEGEL**

(71) Anmelder: Siemens Aktiengesellschaft, 80333 München (DE)
(72) Erfinder: Springborn, Dirk, 12203 Berlin (DE)

(57) **Zusammenfassung**

Die vorliegende Erfindung betrifft eine Pyrometersonde (1) mit einem Umlenkspiegel (10), welcher derart ausgeführt ist, dass er wenigstens einen Passabschnitt (11) aufweist, und in ein Innengehäuse (5) der Pyrometersonde (1) im Bereich eines Gegenpassabschnitts (12) eingesetzt ist, wobei die Fixierung des Umlenkspiegels (10) dadurch erreicht ist, dass das Innengehäuse (5) mit eingepasstem Umlenkspiegel (10) in ein Außengehäuse (7) eingefügt ist, welches den Umlenkspiegel (10) kontaktiert und damit fixiert.

## Beschreibung

Die vorliegende Erfindung betrifft eine Pyrometersonde mit einem Umlenkspiegel, welcher in diese Pyrometersonde eingesetzt ist.

Pyrometersonden dienen der Temperaturmessung, indem sie bereichsweise das Spektrum der Wärmestrahlung erfassen und über die Wärmestrahlungsleistung gemäß dem Stefan-Boltzmann-Gesetz Auskunft über die Temperatur des Wärme strahlenden Körpers geben können. Bei nichtgegenständlichen Körpern, wie etwa einer Verbrennungsatmosphäre, stellt die Pyrometersonde die zuverlässigste und schnellste Form der Temperaturbestimmung dar. Gerade auch in Umgebungen, bei welchen sehr hohe Temperaturen vorherrschen, ist die Pyrometersonde mitunter die einzige Möglichkeit, diese Temperatur zu bestimmen. So werden bspw. in Gasturbinen Temperaturmessungen im Heißgasbereich bevorzugt mit Pyrometersonden vorgenommen. Die aus dem Heißgasbereich austretende Wärmestrahlung wird hierbei eingefangen und der Pyrometersonde zur Messung zugeführt.

In der Pyrometersonde ist es für die Strahlungsführung und Strahlungskonditionierung mitunter erforderlich, dass optische Bauteile, mit der Wärmestrahlung wechselwirken. So können bspw. Spiegel eine Bündelung bzw. Umlenkung der Wärmestrahlung erreichen. Damit jedoch die Temperaturmessung möglichst exakt erfolgen kann, ist eine im Raum fest positionierte Anordnung eines optischen Bauteils erforderlich. Damit an der Pyrometersonde weiterhin auch Austausch und Wartungsarbeiten vorgenommen werden können, müssen diese Bauteile demontier- und zerlegbar ausgebildet sein. Darüber hinaus ist auch erforderlich, dass die Pyrometersonde selbst nur ein geringeres Volumen einnimmt, da in zahlreichen Messumgebungen nur ein geringes Raumangebot zur Verfügung steht. Bei Gasturbinen ist es zudem erforderlich, die Pyrometersonden möglichst klein auszuführen, um die Größe möglicher Leckagekanäle in der Gehäusewandung ebenfalls möglichst gering zu halten.

Die bisher der Anmelderin bekannten Konzepte zur Anbringung eines Umlenkspiegels im Sinne eines optischen Bauteils in einer solchen Pyrometersonde beruhen allesamt darauf, dass dieser Umlenkspiegel mittels geeigneter Feststellmittel fixiert wird. So werden bspw. Umlenkspiegel an den Bereichen des Spiegels, welche keine optische Funktion aufweisen, mittels Feststellschrauben fixiert.

Problematisch an dieser Form der Fixierung ist jedoch, dass zur Herbeiführung einer ausreichend festen Fixierung der Umlenkspiegel eine Mindestgröße aufweisen muss, damit das Feststellmittel ausreichend mit dem Umlenkspiegel mechanisch wechselwirken kann. So ist in herkömmlichen Umlenkspiegeln, bspw. eine Vertiefung vorgesehen, in welche die Schraubenspitze eingreifen kann, um den Umlenkspiegel etwa in seinen Sitz fest anzudrücken.

Diese Feststellmittel sind jedoch aufgrund der Erfahrungen der Anmelderin nachteilig, da die Reproduzierbarkeit des genauen Sitzes des Umlenkspiegels in der Pyrometersonde nicht ausreichend hoch ist. Bspw. ist mitunter eine Neujustierung nach dem Austauschen des Umlenkspiegels erforderlich, damit die Temperaturmessung ausreichend zuverlässig erfolgen kann. Weiterhin erfordern die bekannten Feststellmittel einen Umlenkspiegel einer vorbestimmten Minimalgröße, damit die Fixierung ausreichend fest erfolgen kann, ohne den Umlenkspiegel zu schädigen. Damit können Pyrometersonden jedoch möglicherweise nicht ausreichend klein hergestellt werden, um sie in Anwendungen bei geringem Raumangebot einzusetzen.

Insofern stellt sich das technische Erfordernis, eine Pyrometersonde mit Umlenkspiegel vorzuschlagen, welche die aus dem Stand der Technik bekannten Nachteile vermeiden kann. Insbesondere ist es erforderlich, eine Pyrometersonde vorzuschlagen, bei welcher der Umlenkspiegel nach Vornahme von Wartungsarbeiten hinsichtlich seiner optischen Justierung ausreichend reproduzierbar ausgetauscht werden kann, jedoch die Größe der Pyrometersonde und des Umlenkspiegels ausreichend klein gewählt werden kann, um auch bei geringem Raumangebot genutzt werden zu können.

Diese der Erfindung zugrundeliegende Aufgabe wird gelöst durch eine Pyrometersonde gemäß Anspruch 1.

Insbesondere wird diese der Erfindung zugrundeliegende Aufgabe gelöst durch eine Pyrometersonde mit einem Umlenkspiegel, welcher derart ausgeführt ist, dass er wenigstens einen Passabschnitt aufweist, und in einem Innengehäuse der Pyrometersonde im Bereich eines Gegenpassabschnittes eingesetzt ist, wobei die Fixierung des Umlenkspiegels dadurch erreicht ist, dass das Innengehäuse mit eingepasstem Umlenkspiegel in ein Außengehäuse eingefügt ist, welches den Umlenkspiegel kontaktiert und damit fixiert.

Erfindungsgemäß ist also vorgesehen, die Fixierung des Umlenkspiegels in dem Innengehäuse in erster Linie durch einen Presskontakt mit dem Außengehäuse herbeizuführen. Damit kann der Umlenkspiegel leicht nach Lösen des Presskontakts wieder aus dem Innengehäuse etwa zu Wartungsarbeiten entfernt werden.

An dieser Stelle ist darauf hinzuweisen, dass der Passabschnitt und Gegenpassabschnitt formschlüssig ineinander eingreifen. Der Passabschnitt ist insbesondere nicht als plane Fläche ausgeführt, wobei der Gegenpassabschnitt ebenfalls als plane Gegenfläche ausgeführt wäre. Ein reiner Flächenpresskontakt könnte nämlich nicht die genaue Position des Umlenkspiegels gewährleisten, so dass eine optische Dejustierung der Pyrometersonde im Laufe des Betriebs die Folge sein könnte. Dies wäre insbesondere in einem Betriebsumfeld der Fall, in welchem starke mechanische Erschütterungen zu erwarten sind, wie etwa bei einer Gasturbine. Insofern ist der Passabschnitt und Gegenpassabschnitt im Sinne einer dreidimensionalen Geometrie zu verstehen, welche beide formschlüssig miteinander in Kontakt gebracht sind.

Erfindungsgemäß ist weiter vorgesehen, den Umlenkspiegel in einen geeigneten Gegenpassabschnitt des Innengehäuses einzusetzen, wobei der Umlenkspiegel selbst einen Passabschnitt aufweist, der eine für den Gegenpassabschnitt geeignete Form aufweist. Der Umlenkspiegel wird also zunächst in dem Innengehäuse der Pyrometersonde lediglich durch den formschlüssigen Einsatz in seiner Position gehalten. Die Fixierung des Umlenkspiegels erfolgt dann indem das Innengehäuse mit eingepasstem Umlenkspiegel in ein entsprechendes Außengehäuse eingeführt wird, so dass Bereiche des Außengehäuses mit dem Umlenkspiegel in Kontakt geraten.

Dieser Kontakt sorgt nun dafür, dass der Umlenkspiegel in dem Innengehäuse nicht weiter bewegt werden kann und damit im optischen Strahlengang eine fixierte Position erhält. Da die Kontaktierung von Innengehäuse und Außengehäuse normalerweise zudem relativ große Flächenbereiche betrifft, ist die Fixierung des Umlenkspiegels ausreichend fest, um etwa auch in Umgebungen, welche bei Betrieb sehr starke Erschütterungen aufweisen, ausreichend fixiert zu sein.

Gemäß einer ersten Ausführungsform der Erfindung ist vorgesehen, dass der Gegenpassabschnitt nicht endständig in dem Innengehäuse angeordnet ist. Damit kann gewährleistet werden, dass der Umlenkspiegel in dem Innengehäuse mit ausreichend großen Flächen des Gegenpassabschnittes in Kontakt gelangen kann, um einen möglichst stabilen Sitz bereitzustellen. Der Umlenkspiegel kann damit sicher in dem Innengehäuse aufgenommen sein, ohne eine optische Dejustierung nach ausreichender Fixierung befürchten zu müssen.

Gemäß einer weiteren Ausführungsform der erfindungsgemäßen Pyrometersonde ist vorgesehen, dass das Innengehäuse den Strahlengang der Pyrometersonde begrenzt. Der Umlenkspiegel kann also direkt in den optischen Strahlenkanal eingesetzt werden, so dass die Verfälschungen der Messung durch weitere Bauteile des Innengehäuses weitgehend gering gehalten werden.

Gemäß einer besonders bevorzugten Ausführungsform der Erfindung ist vorgesehen, dass der Umlenkspiegel nicht durch ein weiteres Feststellmittel fixiert ist. Ein derartiges Feststellmittel kann eine Feststellschraube, eine Klammer oder auch ein anderes mechanisches Feststellelement sein. Insofern ist die Pyrometersonde besonders einfach jedoch wartungsfreundlich und sicher ausgeführt.

Entsprechend einer weiteren Ausführungsform der Erfindung ist die Geometrie des Umlenkspiegels wenigstens teilweise als schräg geschnittener Zylinder ausgeführt. Eine derartige Geometrie lässt sich durch bekannte Herstellungsverfahren optischer Instrumente leicht realisieren, wobei der Einsatz des Umlenkspiegels in das Innengehäuse der Pyrometersonde lediglich eine Bohrung erfordert, in welche dieser wenigstens teilweise zylindrisch geformte Abschnitt der Pyrometersonde eingesetzt werden kann. Das Innengehäuse kann also durch einfache und kostengünstige Herstellungsverfahren mit hoher optischer Genauigkeit gefertigt werden.

Gemäß einer weiteren Ausführungsform der Erfindung ist vorgesehen, dass der Umlenkspiegel einen Abschnitt aufweist, welcher nach Einsetzen in den Gegenpassabschnitt des Innengehäuses die äußere Oberfläche des Innengehäuses derart ergänzt, dass wenigstens bereichsweise eine gleichmäßige Oberfläche im Wesentlichen ohne Stufen resultiert. Diese gleichmäßige Oberfläche kann nun geeignet mit weiteren Flächen des Außengehäuses in Kontakt gebracht werden, so dass über den Presskontakt an der wenigstens bereichsweise gleichmäßigen Oberfläche eine Fixierung des Umlenkspiegels erreicht werden kann. Damit kann also eine sehr einfache, jedoch sehr zuverlässige Fixierung des Umlenkspiegels in dem Innengehäuse und damit in der gesamten Pyrometersonde vorgenommen werden.

Weiterhin kann das Innengehäuse wenigstens eine Nut aufweisen, an welcher nach Einsetzen des Umlenkspiegels in den Gegenpassabschnitt des Innengehäuses eine Stufe zwischen Umlenkspiegel und Oberfläche des Innengehäuses im Bereich der Nut vorliegt. Die erfindungsgemäße Stufe soll hierbei natürlich nicht die optische Nutzfläche des Umlenkspiegels umfassen, so dass eine Beschädigung dieser etwa bei Heraushebeln des Umlenkspiegels im Bereich der Stufe vermieden werden kann. Die Stufe selbst erlaubt ausreichend Angriffsfläche für einen Nutzer, um etwa den Umlenkspiegel aus dem Innengehäuse wieder entfernen zu können. Folglich erhöht das Vorsehen einer solchen Stufe die Wartungsfreundlichkeit der Pyrometersonde.

Entsprechend einer Weiterführung dieser Ausführungsform kann vorgesehen sein, dass das Innengehäuse eine zylindrische Geometrie aufweist und die wenigstens eine Nut parallel zur Drehsymmetrieachse des Zylinders verläuft. Die Nut kann verschiedenen Funktionen dienen. So kann bspw. entlang der Nut ein geeignetes Kühlmedium eingeströmt werden, oder die Nut kann auch als Verdrehsicherung in der Aufnahme des Außengehäuses dienen. Somit kann eine deutlich funktionellere Pyrometersonde hergestellt werden.

Weiterhin ist es denkbar, dass die Pyrometersonde im Bereich der Stufe zwischen Umlenkspiegel und Oberfläche des Innengehäuses ein Fluidleitungsabschnitt angrenzt, so dass dieser Teil der Pyrometersonde mit Kühlfluid versorgt werden kann. Der Fluidleitungsabschnitt ermöglicht also die gezielte Zuführung von Kühlfluid und damit die für Anwendungen in einem sehr heißen Umfeld erforderliche Kühlung der Bauteile. Weiterhin kann durch die Kühlung vermieden werden, dass bei sehr hohen Temperaturen Spannungen aufgrund unterschiedlicher Wärmeausdehnungen zwischen dem Umlenkspiegel und den angrenzenden Kontaktflächen resultiert, wodurch etwa ein Brechen oder eine Beschädigung des Umlenkspiegels die Folge sein könnte. Nachfolgend soll die Erfindung anhand einiger Figuren im Detail näher beschrieben werden. Hierbei ist darauf hinzuweisen, dass die Figuren lediglich schematisch zu verstehen sind und keinerlei Einschränkung der Ausführbarkeit der Erfindung daraus resultiert.

Weiterhin ist darauf hinzuweisen, dass alle Bauteile, welche mit gleichen Bezugszeichen versehen sind, gleiche technische Wirkungen aufweisen.

Fernerhin ist darauf hinzuweisen, dass alle beliebige Kombinationen der nachfolgend beschriebenen Merkmale beansprucht werden sollen, soweit diese Kombinationen eine Lösung der der Erfindung zugrundeliegenden Aufgabe leisten. Die Kombination der nachfolgend beschriebenen technischen Merkmale umfasst auch eine beliebige Kombination mit den vorab beschriebenen Ausführungsformen der Erfindung.

Hierbei zeigen:
- Figur 1: eine perspektivische Seitenansicht auf das Innengehäuse und den Umlenkspiegel einer Ausführungsform der erfindungsgemäßen Pyrometersonde in Explosionsdarstellung.
- Figur 2: eine perspektivische Seitenansicht der in Figur 1 gezeigten Ausführungsform der erfindungsgemäßen Pyrometersonde bei vollständig eingesetztem Umlenkspiegel in das Innengehäuse.
- Figur 3: eine seitliche Schnittansicht durch das Innengehäuse und den Umlenkspiegel in einer Ausführungsform, wie sie in Figur 2 dargestellt ist.
- Figur 4: eine Ausführungsform der erfindungsgemäßen Pyrometersonde, welche neben dem Innengehäuse und dem Umlenkspiegel, wie in den vorhergehenden Figuren bereits gezeigt, auch ein Außengehäuse aufweist.

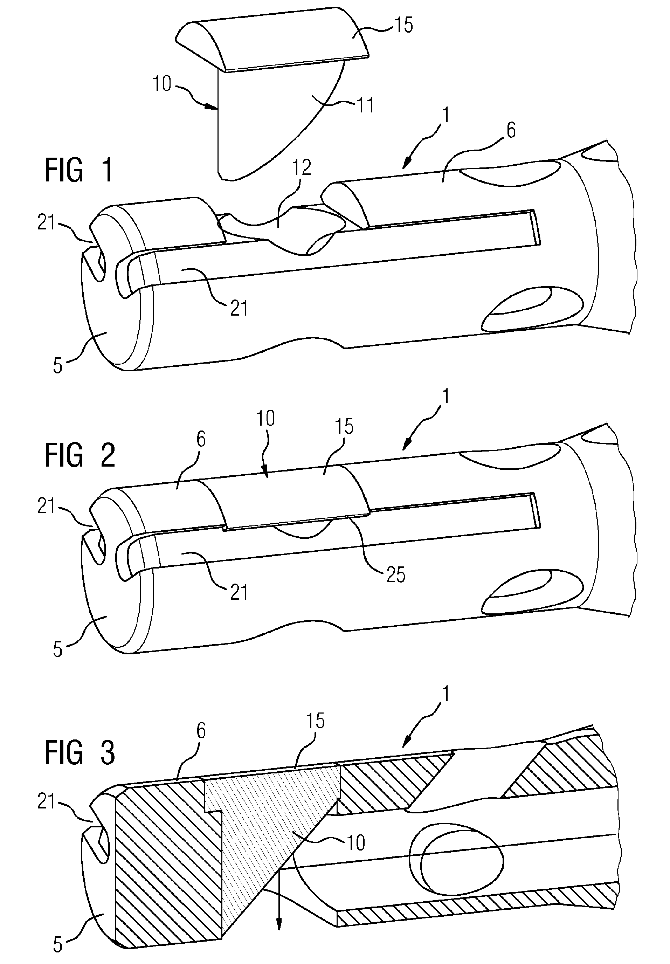

Figur 1 zeigt eine perspektivische Explosionsdarstellung des Innengehäuses 5 zusammen mit einem Umlenkspiegel 10 einer Ausführungsform einer erfindungsgemäßen Pyrometersonde 1. Das Innengehäuse 5 ist hierbei im Wesentlichen zylindrisch und weist eine Oberfläche 6 auf, die das Innengehäuse 5 begrenzt. In einem nicht endständigen Bereich des Innengehäuses 5 ist hierbei eine Bohrung im Sinne eines Gegenpassabschnittes 12 eingefügt, in welche der wenigstens teilweise zylindrisch geformter Umlenkspiegel 10 eingesetzt werden kann. Der Umlenkspiegel 10 weist hierbei einen geeignet geformten Passabschnitt 11 auf, welcher in den Gegenpassabschnitt 12 des Innengehäuses 5 formschlüssig eingesetzt werden kann.

Damit der Umlenkspiegel 12 nach Einsetzen in den Gegenpassabschnitt 12 nicht optisch dejustiert wird, weist dieser als Abschluss auf einer Seite eine fest angebrachte Abdeckung auf. Diese Abdeckung weist ihrerseits einen zylindrisch geformten Abschnitt 15 auf, welcher nach Einsetzen des Umlenkspiegels 10 soweit mit der zylindrischen Oberfläche 6 des Innengehäuses 5 übereinstimmt, das wenigstens eine teilweise gleichmäßige Oberfläche resultiert, die keine weiteren Stufen aufweist.

Darüber hinaus weist das Innengehäuse 5 jeweils seitlich von dem Umlenkspiegel 10 angeordnet zwei Nuten 21 auf, die als Verdrehsicherung des Innengehäuses 5 bei Einsetzen in das nicht weiter gezeigte Außengehäuse 7 dienen. Gleichzeitig steht eine Stufe des Abschnittes 15 nach vollständigem Einsetzen des Umlenkspiegels 10 im Bereich der Nuten 21 an der Oberfläche des Innengehäuses 5 über, so dass mit geeignetem Werkzeug der Umlenkspiegel 10 wiederum aus dem Innengehäuse 5 entfernt werden kann, indem der Umlenkspiegel 10 nämlich an den Stufen mit dem Werkzeug entsprechend manipuliert wird.

Diese Stufen 25 sind besser sichtbar in der Figur 2, welche die Ausführungsform der in Figur 1 gezeigten Pyrometersonde 1 wiedergibt, jedoch nach vollständigem Einsetzen des Umlenkspiegels 10 in das Innengehäuse 5.

In Figur 3 wird eine seitliche Schnittansicht durch die in Figur 2 gezeigte Ausführungsform der erfindungsgemäßen Pyrometersonde 1 gezeigt, wobei der Umlenkspiegel 10 vollständig in das Innengehäuse 5 eingesetzt ist. Deutlich zu erkennen ist die flächige Fluchtung des Abschnitts 15 mit der Oberfläche 6 des Innengehäuses 5, so dass im Bereich dieses Abschnittes 15 keine weitere Stufe übersteht.

Weiterhin ist der Strahlengang in dem Innengehäuse 5 zu erkennen, welcher durch Pfeile angedeutet ist.

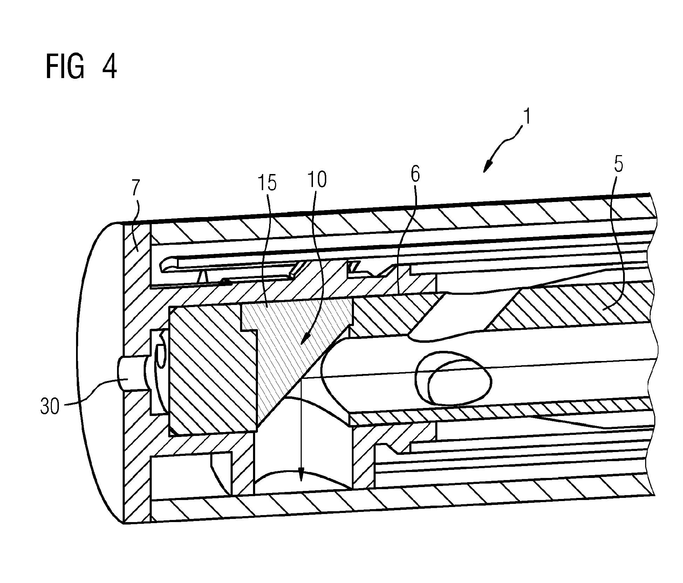

Um nun den Umlenkspiegel 10 in dem Innengehäuse 5 ausreichend fest zu fixieren, ist es erforderlich, die Gesamtheit von Innengehäuse 5 und Umlenkspiegel 10 in einen geeignet geformten Aufnahmeabschnitt eines Außengehäuses 7 einzuführen. Vorbestimmte Flächen des Außengehäuses 7 treten mit der Oberfläche 6 des Innengehäuses 5 sowie dem Abschnitt 15 in Presskontakt und übertragen somit eine Kraft auf den Umlenkspiegel 10, welche diesen in dem Innengehäuse 5 fest fixiert. Dieser Presskontakt im Bereich des Abschnittes 15 des Umlenkspiegels 10 kann in der seitlichen Querschnittsansicht nach Figur 4 durch die gezeigten Kontaktlinien nachvollzogen werden. Hierbei entspricht die Gesamtheit aus Innengehäuse 5 und Umlenkspiegel 10 der in den vorhergehenden Figuren gezeigten Ausführungsformen.

Um nun den Umlenkspiegel 10 bzw. das Innengehäuse 5 mit dem Umlenkspiegel 10 selbst zu kühlen, ist in dem Außengehäuse 7 ein Fluidleitungsabschnitt 30 vorgesehen, über welchen Kühlfluid in die beiden Nuten 21 einströmen kann.

Weitere Ausführungsformen ergeben sich aus den Unteransprüchen.

## Patentansprüche

1. Pyrometersonde (1) mit einem Umlenkspiegel (10), welcher derart ausgeführt ist, dass er wenigstens einen Passabschnitt (11) aufweist, und in ein Innengehäuse (5) der Pyrometersonde (1) im Bereich eines Gegenpassabschnitts (12) eingesetzt ist, wobei die Fixierung des Umlenkspiegels (10) dadurch erreicht ist, dass das Innengehäuse (5) mit eingepasstem Umlenkspiegel (10) in ein Außengehäuse (7) eingefügt ist, welches den Umlenkspiegel (10) kontaktiert und damit fixiert.

2. Pyrometersonde (1) gemäß Anspruch 1,
**dadurch gekennzeichnet, dass**
der Gegenpassabschnitt (12) nicht endständig in dem Innengehäuse (5) angeordnet ist.

3. Pyrometersonde (1) gemäß einem der vorhergehenden Ansprüche,
**dadurch gekennzeichnet, dass**
das Innengehäuse (5) den Strahlengang der Pyrometersonde (1) begrenzt.

4. Pyrometersonde (1) gemäß einem der vorhergehenden Ansprüche,
**dadurch gekennzeichnet, dass**
der Umlenkspiegel (10) nicht durch ein weiteres Feststellmittel fixiert ist.

5. Pyrometersonde (1) gemäß einem der vorhergehenden Ansprüche,
**dadurch gekennzeichnet, dass**
die Geometrie des Umlenkspiegels (10) wenigstens teilweise als schräg geschnittener Zylinder ausgeführt ist.

6. Pyrometersonde (1) gemäß einem der vorhergehenden Ansprüche,
**dadurch gekennzeichnet, dass** der Umlenkspiegel (10) einen Abschnitt (15) aufweist, welcher nach Einsetzen in den Gegenpassabschnitt (12) des Innengehäuses (5) die äußere Oberfläche (6) des Innengehäuses (5) derart ergänzt, dass wenigstens bereichsweise eine gleichmäßige Oberfläche (6) im Wesentlichen ohne Stufen resultiert.

7. Pyrometersonde (1) gemäß einem der vorhergehenden Ansprüche,
**dadurch gekennzeichnet, dass**
das Innengehäuse (5) wenigstens eine Nut (21) aufweist, an welcher nach Einsetzen des Umlenkspiegels (10) in den Gegenpassabschnitt (12) des Innengehäuses (5) eine Stufe (25) zwischen Umlenkspiegel (10) und Oberfläche (6) des Innengehäuses (5) im Bereich der Nut (21) vorliegt.

8. Pyrometersonde (1) gemäß Anspruch 7,
**dadurch gekennzeichnet, dass**
das Innengehäuse (5) eine zylindrische Geometrie aufweist und die wenigstens eine Nut (21) parallel zur Drehsymmetrieachse dieses Zylinders verläuft.

9. Pyrometersonde (1) gemäß Anspruch 7 oder 8,
**dadurch gekennzeichnet, dass**
im Bereich der Stufe (25) zwischen Umlenkspiegel (10) und Oberfläche (6) des Innengehäuses (5) ein Fluidleitungsabschnitt (30) angrenzt, so dass dieser Teil der Pyrometersonde (1) mit Kühlfluid versorgt werden kann.
